(19) Europäisches Patentamt
European Patent Office
Office européen des brevets

(11) **EP 3 734 388 B1**

(12) **EUROPEAN PATENT SPECIFICATION**

(45) Date of publication and mention
of the grant of the patent:
**15.03.2023  Bulletin 2023/11**

(21) Application number: **19315027.3**

(22) Date of filing: **29.04.2019**

(51) International Patent Classification (IPC):
**G05D 1/00** *(2006.01)*      **G05D 1/02** *(2006.01)*

(52) Cooperative Patent Classification (CPC):
**G05D 1/027; G05D 1/0238; G05D 1/0274**

(54) **METHOD AND APPARATUS FOR PERFORMING SIMULTANEOUS LOCALIZATION AND MAPPING**

VERFAHREN UND VORRICHTUNG ZUR DURCHFÜHRUNG VON GLEICHZEITIGER ORTUNG UND KARTIERUNG

PROCÉDÉ ET APPAREIL PERMETTANT D'EFFECTUER UNE LOCALISATION ET UNE CARTOGRAPHIE SIMULTANÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.11.2020  Bulletin 2020/45**

(73) Proprietor: **Commissariat à l'Energie Atomique et aux Energies Alternatives
75015 Paris (FR)**

(72) Inventors:
• **DIA, Roxana**
  **38054 Grenoble (FR)**
• **LESECQ, Suzanne**
  **38054 Grenoble (FR)**
• **MAREAU, Nicolas**
  **38054 Grenoble (FR)**
• **MOTTIN, Julien**
  **38054 Grenoble Cedex 9 (FR)**
• **PUSCHINI PASCUAL, Diego**
  **68054 Grenoble Cedex 9 (FR)**
• **RAKOTOVAO ANDRIAMEHEFA, Tiana**
  **38045 Grenoble (FR)**

(74) Representative: **Atout PI Laplace
Immeuble "Visium"
22, avenue Aristide Briand
94117 Arcueil Cedex (FR)**

(56) References cited:
**US-A1- 2004 013 295     US-A1- 2016 062 361**

**Description**

The invention relates to a method of performing simultaneous localization of a mobile body and mapping of its environment using distance (or "range") and motion sensors. It also relates to an apparatus for carrying out such a method.

The invention applies, in particular, to the field of the navigation of robots, drones, autonomous vehicles, etc. and more generally to that of perception.

In the following, "mapping the environment" will designate the task of determining the position, in a suitable reference frame, of physical bodies within a region of space surrounding in whole or in part the mobile body (also called a "carrier"). "Localization" refers to the task of determining at least the position, and preferably also the heading, of the mobile body within such a region of space. "Performing simultaneous localization and mapping" refers to a situation wherein signals provided by sensors are processed to determine the position/heading of the mobile body (carrier) and simultaneously detect and localize obstacles in the surrounding space.

The moving body may be a robot, drone, autonomous vehicle or the like, or even a device which cannot move autonomously but is carried by a person or a machine (e.g. an "electronic white cane" assisting visually impaired people).

By "physical body" (also called an "obstacle") it is meant any physical object or substance that exhibits individuality and can be detected by an appropriate sensor. Thus, inanimate objects, be they natural or artificial, plants, animals, human beings, but also liquid or solid particles in suspension in the air, such as clouds, or indeed liquid or gaseous masses, are considered to be physical bodies.

A distance (or "range") sensor is a sensor which provides information about at least the distance to a nearest obstacle in its field of view. Its physical operating principle is irrelevant: sensors as diverse as LIDARs, radars, sonars, etc. may be used to implement the inventive method and apparatus. Some distance sensors may provide additional information, e.g. the distance of all obstacles in a field of view and in some cases the azimuth / elevation of said obstacles.

A distance sensor may be considered to be of the "narrow-angle" or of the "wide-angle" type. A distance sensor is considered to be "wide-angle" when there is a non-negligible likelihood that several different obstacles are simultaneously present inside its field of view, and at a same distance from it (taking into account the finite resolution of the distance measurement). Conversely, a distance sensor is considered to be "narrow-angle" when such likelihood is negligible. Therefore, these definitions are application-dependent. While in most cases a sensor having a field of view of 15° or more can be considered to be a "wide-angle" sensor this is not always the case, and conversely a narrower field of view may nevertheless be considered "wide" enough to benefit from the invention.

A motion sensor is a sensor which provides information about the movements (translation and/or rotation) of the moving body with respect to its environment. Its physical operating principle is irrelevant: sensors as diverse as rotary encoders, inertial sensors, Doppler radars or sonars etc. may be used to implement the inventive method and apparatus.

Environment mapping can be performed according to several different techniques, most of which belong to one of two main families: geometric procedures, which are aimed at identifying the geometry of the objects of the surrounding space, and occupancy grid based procedures, which are aimed at determining whether a certain location is occupied by an obstacle. The occupancy grid technique is disclosed e.g. by [1]

Localization, also called "position estimation", can also be performed according to different techniques. In particular, the so-called "Markov localization" [2] approach aims at estimating the probability distribution in space of the carrier's position, and its evolution as the carrier moves and/or new signals are acquired by different sorts of sensors. It is important to note that it is not possible to use motion (or "odometric") sensor alone to perform position estimation, as the growth of the estimation error over time would be unbounded.

In the simplest cases, Markov localization assumes that the environment is known and static, i.e. there is a known "map" of the environment on which the carrier has to be localized. Researchers, however, have also tackled the more complex problem of simultaneous localization and mapping (SLAM) wherein the environment is unknown and/or dynamic, and a map of it has to be built simultaneously with the estimation of the position of the carrier.

Document [3] discloses a SLAM algorithm called FastSLAM wherein sensors (e.g. laser sensors) are used for detecting "landmarks" of the environment. The measurements issued by the sensors are used for updating a carrier position using particle filters, while the landmarks themselves are localized using extended Kalman filters. The method supposes that a measurement can be unambiguously associated to a given landmark, which is a rather stringent hypothesis. Moreover, it is computationally heavy (it requires a high number of Kalman filters) and the error of the pose estimation may diverge in some cases.

Document [4] discloses a SLAM algorithm wherein the environment is represented using an occupancy grid. The heading of the carrier is supposed to be known and its position is determined using the "scan matching" method. A drawback of this method is that the carrier heading is simply supposed to be known, which is not usually the case in real-word applications. Moreover, the method does not account for the impact of the uncertainty of the carrier position on the updating of the occupancy grid.

Document [5] discloses a SLAM method combining odometry and sonar measurements. The environment is represented using an occupancy grid updated by a Kalman filter, while a particle filter is used for tracking the pose of the carrier. A drawback of this method is that it does not account for the impact of the uncertainty of the positions of the obstacle on the updating of the carrier position.

Document [6] discloses a SLAM method using an occupancy grid for representing the environment and a pose grid for representing the carrier position and orientation. This approach has an exponential computational complexity, which makes it difficult to apply to embarked systems, having a limited computing power. Moreover, it relies on restrictive hypotheses (an insufficiently general sensor model, a specific motion model).

US 8,340,852 discloses the application of SLAM using an inertial measurement unit (IMU) and range sensors to autonomous vehicles. SLAM is performed using an optimization algorithm, which does not allow taking into account the measurement incertitude.

US 2004/013295 discloses a method of performing SLAM using a pair of cameras for acquiring images of the environment, detecting obstacles and identifying landmarks, and odometric sensors.

US 2016/0062361 discloses a navigation method for a mobile robot, including a first step wherein the robot moves along a path following input commands from an operator and detecting obstacle, and a second step wherein the robot moves autonomously upgrading a map of the environment and estimating its own position.

The invention aims at overcoming, in full or in part, at least some of the drawbacks of the prior art. More particularly it aims at providing a SLAM method having an acceptable computational complexity, general applicability (i.e. avoiding overly-restrictive hypothesis) and explicitly accounting for uncertainties on sensor measurements. Advantageously, such a method should be able to be carried out by an embarked processor with limited computing power.

According to the invention, an object of the invention allowing achieving these aims in full or in part is a method of performing simultaneous localization of a mobile body and mapping of its environment according to claim 1.

Another object of the invention is an apparatus for performing simultaneous localization of a mobile body and mapping of its environment, comprising:

- at least one input port for receiving a plurality of signals representative of a first time series of distance measurements arising from one or more distance sensor and a second time series of odometry measurements arising from one or more motion sensor; and
- a data processor configured to receive as input said signals and to use them to construct an updated occupancy grid and an updated pose grid by applying such a method.

Yet another object of the invention is a mobile robot carrying such an apparatus.

Additional features and advantages of the present invention will become apparent from the subsequent description, taken in conjunction with the accompanying drawings, wherein:

- Figure 1 illustrates the notion of "direct" model of a distance sensor;
- Figure 2 illustrates the notion of occupancy grid;
- Figure 3, illustrates the notion of "inverse" model of a distance sensor;
- Figure 4 is a plot representing the spatial discretization of an inverse model on an occupancy grid;
- Figure 5 is a schematic diagram of an apparatus according to an embodiment of the invention;
- Figure 6 illustrates the unfolding of a method according to an embodiment of the invention;
- Figure 7 illustrates in detail a step of the method of figure 6, wherein a distance measurement is used for updating an occupancy grid;
- Figure 8 is a flow-chart of a computation involved in the step of figure 7;
- Figure 9 illustrates how the inverse model of a narrow-angle distance sensor may be computed;
- Figure 10 illustrates in detail a step of the method of figure 6, wherein a distance measurement is used for updating a pose grid;

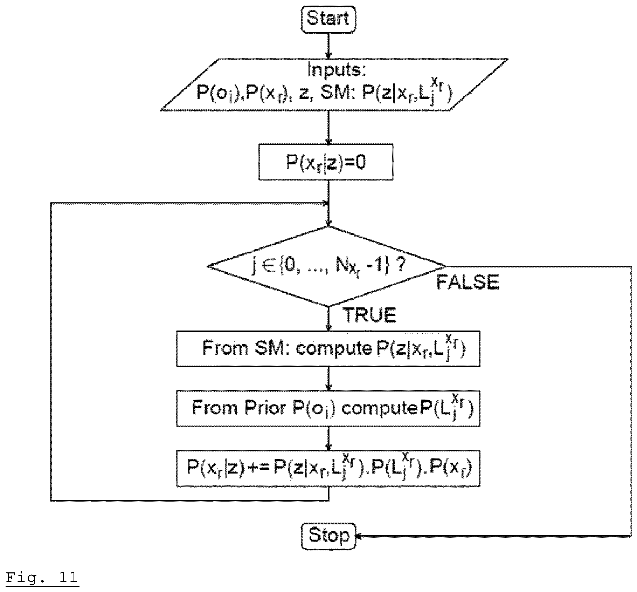

- Figure 11 is a flow-chart of the step of figure 10, when a narrow-angle range sensor such as a LIDAR is used for measuring distances; and
- Figures 12A, 12B and 12C illustrate some calculations required to carry out the method step of figures 10 and 11 when a wide-angle range sensor is used.

A range (or distance) sensor may be represented by use of a probabilistic model, which accounts for its finite precision, resolution and for possible measurement errors.

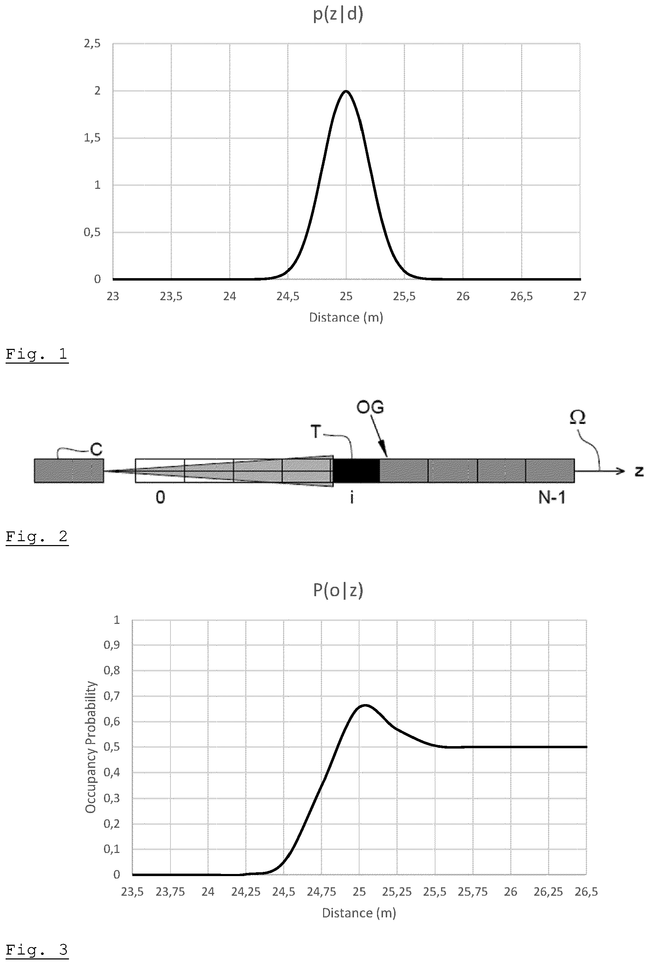

The idea is that a measurement output by the sensor does not necessarily indicate the exact distance between the sensor and the nearest obstacle in its field of view. Instead, for a given distance d, the output z of the sensor is a random variable characterized by a probability distribution $p(z|d)$, constituting the "direct model" of the sensor. Figure 1 presents an exemplary direct model of a sensor; a linear space 50 m long is considered and it is assumed that an obstacle is situated at d=25m from the sensor. For a sensor with an error modeled by a Gaussian function, the most probable value taken by z will be 25 m (assuming that there are no systematic errors), but other values will be possible, with a probability density defined by the curve. In the case of an ideal sensor, one would have $p(z|d)=\delta(z-d)$, where $\delta$ is a Dirac Delta, and the measurement value z would always be equal to the true distance. The direct model of a sensor can be determined experimentally, or it can be obtained from data provided by the constructor (e.g., under a Gaussian hypothesis, the value of the standard deviation suffices to characterize the model).

Hereinafter, $\Omega$ will denote a spatial reference frame in one, two or three dimensions; an occupancy grid OG is a partition of a continuous and bounded region of a space generated by $\Omega$ into a number N of parts, called "cells" and designated by an index $i \in [0, N-1]$. The cell of index i is indicated by $c_i$. Without loss of generality, we shall consider a one-dimensional occupancy grid observed by a single distance sensor C (or a plurality of co-located sensors), the index i increasing with the distance from the sensor ($c_0$ therefore being the cell closest to the sensor and $c_{N-1}$ the one furthest away). This configuration is illustrated on Figure 2.

An obstacle T is a bounded continuous subset of $\Omega$. A cell $c_i$ is said to be occupied by an obstacle T if $T \cap c_i \neq \varnothing$, to be not occupied by T if $A \cap c_i = \varnothing$. Stated otherwise, if the obstacle covers the cell even partially, the latter is considered to be occupied. Other conventions are possible, but in any event a cell must be either free (vacant), or occupied.

For each of the cells of the grid, we consider the binary random experiment "state" which can have one of the two outcomes {occupied; vacant} consisting in knowing whether or not the cell contains an obstacle or not. The state of the cell $c_i$ is denoted $s_i \in \{e_i, o_i\}$. $o_i$ will denote the realisation $s_i=o_i$ (I;e. the cell is occupied), and $e_i$ will denote the realisation $s_i=e_i$ (i.e. the cell is empty).

An occupancy probability $P(o_i)$ - or, equivalently, a vacancy probability $P(e_i)=1-P(o_i)$ - is associated to each cell $c_i$ of an occupancy grid (in the following, a capital "P" will denote a probability, and a lowercase "p" a probability density). Before any measurement, an *a priori* occupancy probability - often, but not necessarily equal to 0.5, is associated to each cell.

It is also considered that the position of the obstacles can only be known with the aid of uncertain distance sensors, characterized by a probabilistic model such as described above which may be written, in the single obstacle approximation, $p(z|\vec{x})$, $\vec{x}$ being the position of the nearest obstacle (in several dimensions, it is a vector, expressed in cartesian, spherical, polar coordinates, etc. and not a simple scalar). The sensors may be telemetric lasers (also called LIDARs), sonars, infrared radars, time-of-flight cameras, etc. More generally, by taking into account the possibility of having $k>1$ obstacles in the field of view of the sensor, the inverse model may be written as $p(z|\vec{x}_1, \vec{x}_2, ..., \vec{x}_k)$, where $\vec{x}_i$ is the position of the i-th obstacle.

A measurement z arising from a sensor makes it possible to determine the conditioned probability of occupancy $P(o_i|z)$ of a cell $c_i$. For a given measurement z, the set of probabilities $P(o_i|z)$ $\forall i \in [0,N-1]$ constitutes what is called the "inverse model" of the sensor on the grid. Whilst the direct model of the sensor describes the response of the sensor as a function of the material world, the inverse model expresses the impact of the measurement on the occupancy grid, which is the model of the material world that is adopted, thereby justifying the term inverse model.

Figure 3 presents a typical example of inverse model of a distance sensor, in a case where z=25m. It may be verified that the occupancy probability is almost zero for the cells which are situated at a distance of less than 24.25m from the sensor and attains a peak for a distance of 25m (corresponding to the measurement provided by the sensor). Beyond 25m, the occupancy probability decreases until it stabilizes at a value of 0.5, indicative of a total ignorance of the occupancy state of the cells which, being situated beyond the obstacle, are masked by the latter and therefore inaccessible to the sensor.

The inverse model, applied to range measurement, allows updating the occupancy probabilities of the occupancy grid.

Documents WO2017/050890 and EP 3 364 213 describe methods for updating the occupancy probabilities of an occupancy grid using a time series of range measurements from one or more "narrow-angle" distance sensors. European Patent Application 18305955 filed on July 13, 2018 generalizes these methods to the case of "wide-angle" sensors. The teaching of these documents can be applied to the present invention

In accordance with the usage which prevails in the literature, Figure 3 represents the inverse model by means of a smoothed curve. A more correct representation would be to display only the points corresponding to the limits of the cells of the grid: indeed, it is not possible to distinguish a "partially" occupied cell from another which would be "totally" occupied, in all cases the distance to the obstacle will be estimated as being the distance to the corresponding cell. This is the spatial error introduced by the grid.

Moreover, for reasons which are explained in WO2017/050890 and which will become apparent in the following, it is preferable to quantize the probability values by allowing them to only take values belonging to a finite set. Suitable quantizing schemes will be described later, see equations (13) - (28).

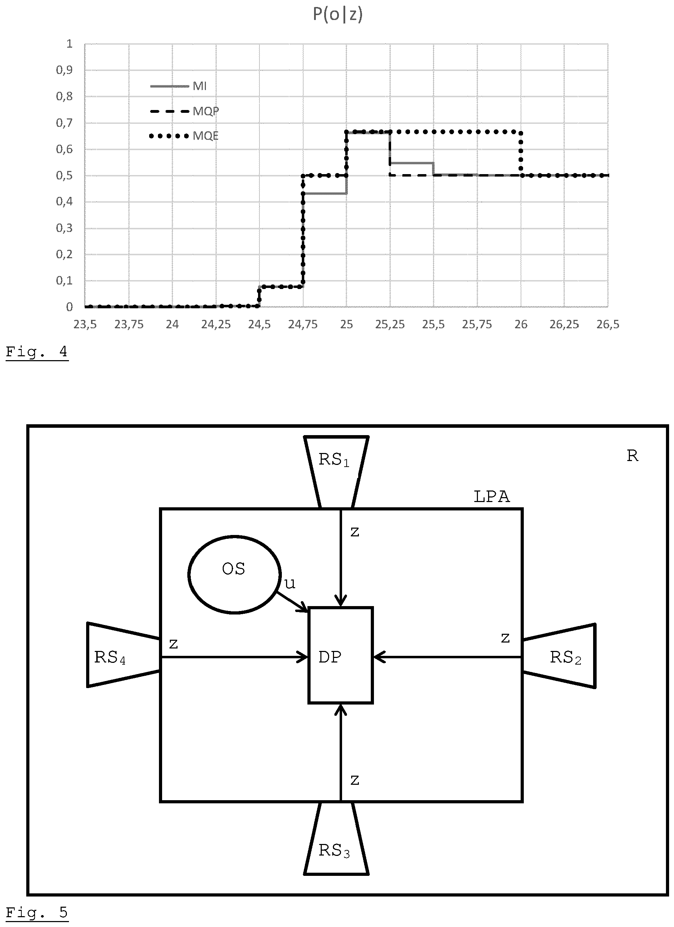

Figure 4 shows the inverse model of Figure 3 spatially discretized but not quantized (curve MI), spatially discretized and quantized taking, for each probability value of the continuous model, the smallest element of $S_1$ exceeding this probability value (curve MQE), spatially discretized and quantized taking, for each probability value of the continuous model, the closest element of $S_1$ (curve MQP).

Similarly, the pose of the carrier may be represented by a "pose grid" $\Pi$, comprising a plurality of cells, each associated to a pose probability. In a preferred embodiment of the invention, a "pose" is constituted by a position in two- or three-dimensions and a heading direction expressed by one or two angles. For some applications (e.g. a terrestrial robot such as an autonomous vehicle), the position will be defined in two dimensions and the heading direction will be expressed by an angle. The invention will be discussed with reference to this case, which is easier to represent on drawings, without loss of generality.

For instance, the position $X_r$ of the carrier may take its values in $L=\{x_i, i=0... M-1\}$ and its heading $\alpha_r$ may take its values in $A=\{\alpha_i, i=0...M'-1\}$. The pose $x_r=(X_r, \alpha_r)$ will then take its values in $\Pi=L\times A$, which is the pose grid. In the following, the pose grid $\Pi$ will be represented by a two-dimensional grid; however, it should be understood that it often represents a parameter space of higher dimensions (e.g. three dimensions: a two-dimensional position and a one-dimensional heading) and that it may be represented, in a computer memory, by a one-dimensional, two-dimensional or higher-dimensional array.

As it will be discussed below, the pose grid is updated using both range measurement, provided by range sensors, and odometry measurement, provided by motion sensors. To this aim, a motion sensor may be represented by a "motion model" $P(x_r^*|x_r, u)$ which expresses the probability that the carrier takes a pose $x_r^*$ knowing that, at a previous time, it had a pose $x_r$ and that an odometry measurement u has been received.

Figure 5 is a very schematic representation of a localization and positioning apparatus LPA according to an embodiment of the invention, on a carrier R such as, e.g. a mobile robot or an autonomous vehicle. Apparatus LPA comprises a plurality of range (or distance) sensors $RS_1$, $RS_2$, $RS_3$, $RS_4$, of a same or of different types, each having a respective field of view and a motion or odometry sensor OS. In different embodiments, a single range sensor and/or several odometry sensors of a same or of different type may be used. Range measurements z and odometry measurements u are provided to a data processor DP (usually, a suitably-programmed microprocessor, microcontroller or digital signal processor, even if the use of a specific processing circuit based on programmable circuits such as FPGA and/or application-specific integrated circuits is also possible). Data processor DP includes a memory device storing data representing direct and inverse models of the range sensors and motion models for the motion sensors, and also storing executable code for carrying out a simultaneous localization and mapping method according to the invention, which will be described in detail hereafter.

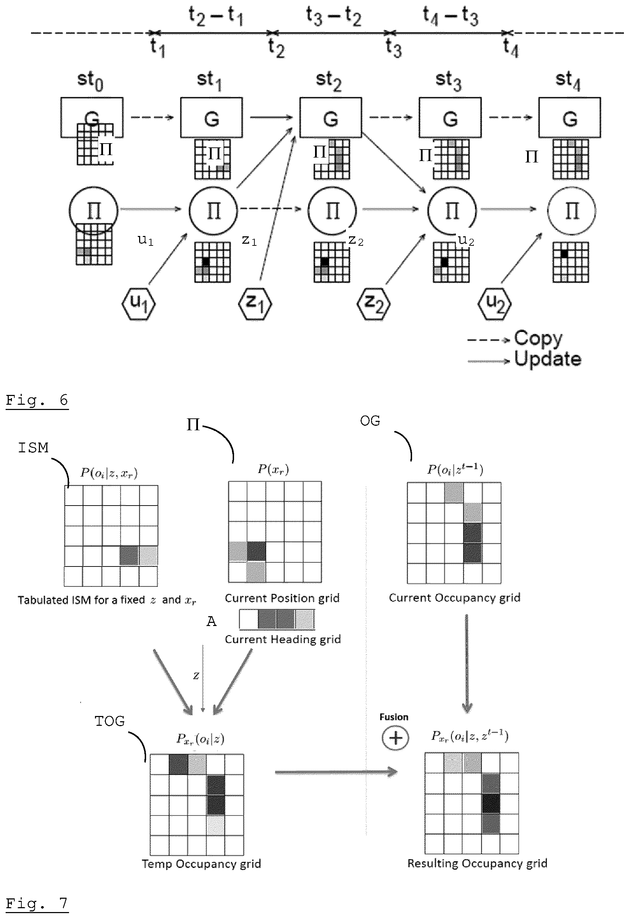

As illustrated on figure 6, according to the invention, odometry measurements u are used to update the pose grid $\Pi$ without affecting the occupancy grid G while distance measurements may be used for updating either the pose grid (combined with the previous knowledge of the pose grid and occupancy grid) or the occupancy grid (combined with the previous knowledge of the occupancy grid and pose grid). For instance, in the example of figure 6:

- Before time $t_1$ the occupancy grid G and the pose grid $\Pi$ are in an initial state $st_0$. The state is characterized by an occupancy probability value for each cell of the occupancy grid, and a pose value for each cell of the pose grid.
- At time $t_1$, a first odometry measurement $u_1$ is received, and used for updating the pose grid $\Pi$ (more precisely, the pose probability of at least some of its cells) while the occupancy grid G remains unchanged. This corresponds to state $st_1$.
- At time $t_2$, a first distance measurement $z_1$ is received. The measurement $z_1$ and the pose grid $\Pi$ are used to compute an updated occupancy grid (more precisely: updated occupancy probabilities of at least some of its cells), while the pose grid remains unchanged (state $st_2$).
- At time $t_3$, a second distance measurement $z_2$ is received. This time, this measurement is used - together with the occupancy grid G - to update the pose grid $\Pi$ (more precisely, the pose probability of at least some of its cells). The occupancy grid remains unchanged (state $st_3$).
- At time $t_4$, a second odometry measurement $u_2$ is received, which is used for updating the pose grid $\Pi$ (i.e. its pose probabilities) while the occupancy grid G remains unchanged (state $st_4$).

It is important to note that the distance and odometry measurements may arrive asynchronously, and it is even possible that several measurements arrive simultaneously. However, two simultaneous odometry measurements must be processed sequentially, while two simultaneous distance measurements may be processed simultaneously, provided that one of them is used for updating the pose grid and the other one for updating the occupancy grid. Similarly, if an odometry measurement and a position measurement are received simultaneously, they may be processed simultaneously provided that the latter is used for updating the occupancy grid. It should be understood that two measurements are deemed to be "received simultaneously" when they are separated by a time interval smaller than a time resolution of the data processor, and that they are "processed simultaneously" is they are applied to a same state $st_i$ of the occupancy and pose grids.

In the example of figure 6 two consecutive distance measurements are used, alternatively, for updating the occupancy grid and the pose grid. This is by no means essential. Different, possibly application-dependent, strategies may be used to determine which grid to update upon receiving a distance measurement.

It is apparent from figure 6 that the inventive method comprises three main steps (carried out several time, but not necessarily in a fixed order - see above):

- updating the occupancy probabilities of the occupancy grid as a function of present values of said occupancy probabilities, of a received distance measurement and of the pose probabilities of the pose grid;
- updating the pose probabilities of the pose grid as a function of present values of said pose probabilities, of a received distance measurement and of the occupancy probabilities of the occupancy grid; and
- updating the pose probabilities of the pose grid as a function of present values of said pose probabilities and of a received odometry measurement.

In the following, possible embodiments of each one of these three steps will be described in detail.

The following notations will be used:

- $P(\cdot)$ will represent the probability of an event;
- $p(-)$ will represent the probability density of a continuous random variable;
- G is an occupancy grid composed of N>1 disjoint cells $c_i$, i=0, ... N-1;
- $o_i$ is the event that cell $c_i$ is occupied by an obstacle;
- $e_i$ is the event that cell $c_i$ is empty (i.e. not occupied by an obstacle);
- $\Pi$ is a pose grid, which may be decomposed into a position grid L and a heading grid A. The position grid L is composed of M disjoint cells, corresponding to M discrete values $x_i$, i=0... M-1 for the position $X_r$ of the carrier, while the heading grid A is composed of M' disjoint cells, corresponding to M' discrete values $\alpha_j$ j=0... M'-1 for the heading $\alpha_r$ of the carrier.
- $x_r=(X_r, \alpha_r)$ represents a pose - i.e. a position and a heading. $P(x_r)$ is the probabilty that the carrier takes pose $x_r$.
- z is the result of a distance (or range) measurement, representing the distance between the carrier (more precisely, a point of the carrier) and an obstacle. In the following, it will be assumed that z can only take discrete values, which is required for digital processing.
- u is the result of an odometry measurement, representing a movement (a translation, a rotation or a combination thereof) of the carrier. In the following, it will be assumed that u can only take discrete values, which is required for digital processing.
- $P(o_i|z,x_r)$ is the inverse model of a range sensor (ISM - inverse sensor model), associating an occupancy probability to each cell of the occupancy grid for a given range measurement result z and a pose of the carrier, $x_r$, deemed to be known. The ISM is supposed to be tabulated for all possible values of z and $x_r$.
- $P(x_r{}^*|x_r, u)$ is the motion model, which expresses the probability that the carrier takes a pose $x_r{}^*$ knowing that, at a previous time, it had a pose $x_r$ and that an odometry measurement u has been received. Again, this model is supposed to be tabulated for all possible values of u and $x_r$.

Using a range measurement for updating the occupancy grid

As illustrated on figure 7, the ISM $P(o_i|z,x_r)$ is tabulated for all admissible values of z and $x_r$ and stored in a memory device. The pose grid $\Pi$ - and therefore the probability $P(x_r)$ of all admissible poses - is also known. When a range measurement z is received, it allows computing the occupancy probabilities of a temporary occupancy grid $P_{xr}(o_i|z)$ - reference TOG on figure 7 - as follows:

$$P_{xr}(o_i|z) = \sum_{x_r \in \Pi} P(o_i|z, x_r)P(x_r|z) = \sum_{x_r \in \Pi} P(o_i|z, x_r)P(x_r)$$

$$(1)$$

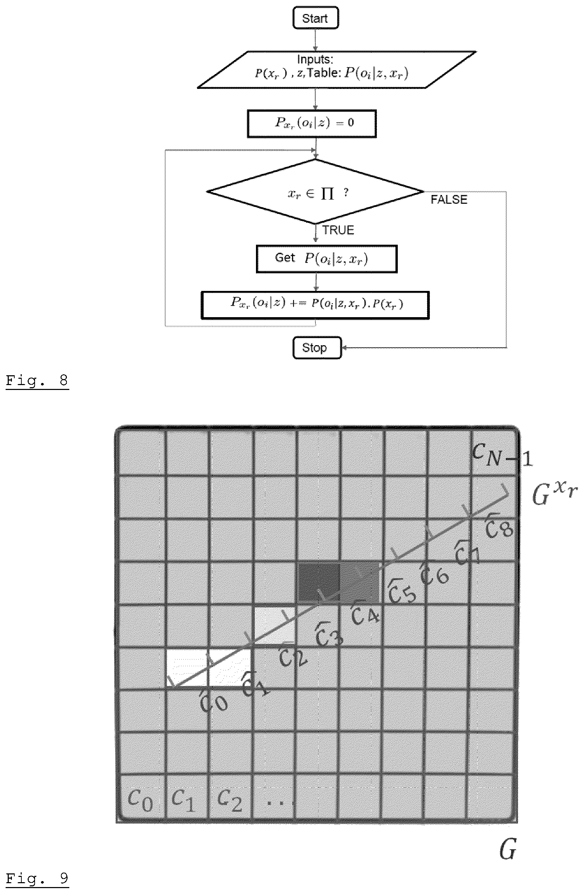

where the second equality accounts for the fact that the pose probability is independent from the range measurement. Figure 8 is a flow-chart illustrating an iterative algorithm for calculating $P_{xr}(o_i|z)$.

Then, the current occupancy probabilities - represented by $P(o_i|z^{t-1})$ - is "fused" with the occupancy probabilities of the temporary grid $P_{xr}(o_i|z)$ to obtain updated occupancy probabilities (i.e. an updated occupancy grid) $P(o_i|z,z^{t-1})$ as follows:

$$P(o_i|z, z^{t-1}) = \frac{P_{xr}(o_i|z)P(o_i|z^{t-1})}{P_{xr}(o_i|z)P(o_i|z^{t-1}) + \left(1 - P_{xr}(o_i|z)\right)\left(1 - P(o_i|z^{t-1})\right)}$$

$$(2)$$

See WO2017/050890 and EP 3 364 213.

Figure 9 shows how $P(o_i|z,x_r)$ is computed for the case of a range sensor having a narrow field of view. The ISM of the sensor for a given measurement value z may be represented by a segment decomposed in one-dimensional cells, each associated to a probability value. For instance, cells $\hat{c}_0$ and $\hat{c}_1$ may be associated to a probability value $\varepsilon$ close to zero, meaning that it is almost impossible that - given measurement z - said cells are occupied. Cells $\hat{c}_2$, $\hat{c}_3$ and $\hat{c}_4$ have probability values equal to 0.3, 0.9, and 0.7, respectively. This means that cell $\hat{c}_3$ has the highest occupancy probability, cell $\hat{c}_2$ is likely to be empty and cell $\hat{c}_4$ is quite likely to be occupied. Cells $\hat{c}_5$ - $\hat{c}_8$ have a probability value of 0.5, representing a complete lack of information. The segment is superposed to the occupancy grid, pose $x_r$ determining the position of its origin and its orientation. Each cell $c_i$ of the occupancy grid intersected by the segment will receive a corresponding occupancy probability value; other cells take an occupancy probability equal to 0.5.

Using a range measurement for updating the pose grid

Updating the pose grid upon reception of a range measurement means computing $P(x_r|z)$. For $x_r \in \Pi$:

$$P(x_r|z) = \frac{p(x_r, z)}{p(z)}$$

$$(3)$$

The denominator p(z) is a constant factor, therefore (3) can be written

$$P(x_r|z) = \eta \cdot p(x_r, z)$$

$$(4)$$

$\eta$ being a constant.

For the sake of simplicity, it will be considered that the position grid L coincides with the occupancy grid G. Therefore, let $x_r=(c_n, \alpha_m)$. For given n and m, one may define $G^{xr}$ be the projection of the occupancy grid G onto the range sensor field of view when the sensor itself is located at $X_r=c_n$ and having a heading $\alpha_r=\alpha_m$. Then, summing over all the possible configurations $G_k^{xr}$ of $G^{xr}$:

$$p(x_r, z) = \sum_k p(x_r, z, G_k^{xr}) = \sum_k p(z|x_r, G_k^{xr}) \cdot P(G_k^{xr}) \cdot P(x_r)$$

$$(5)$$

and therefore (4) can be written

$$P(x_r|z) = \eta \cdot P(x_r) \cdot \sum_k p(z|x_r, G_k^{xr}) \cdot P(G_k^{xr})$$

$$(6)$$

All the terms of (6) are either known or easily computed:

-   $\eta$ is simply a normalization factor;

- $P(x_r)$ is the previously-computed pose probability;

- $p(z|x_r, G_k^{xr})$ is the range sensor model evaluated when the carrier takes a pose $x_r$ and for a given configuration of the occupancy grid, which may be tabulated and stored in a memory device.

- $P(G_k^{xr})$ is the probability of a given configuration of the occupancy grid, which in turn depends on the occupancy probabilities $P(o_i)$. Assuming that the projected grid $G^{xr}$ has $N_{xr}$ elements, the a priori probability of any configuration is $P(G_k^{xr}) = \frac{1}{2^{N_{xr}}}$.

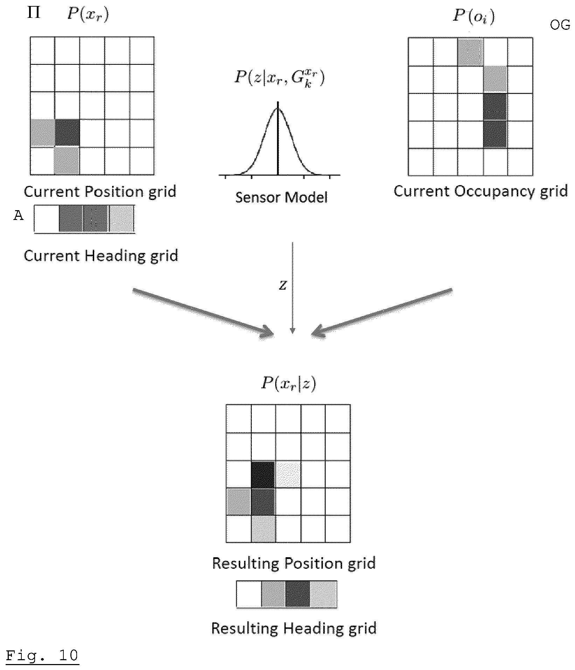

The computation of $P(x_r|z)$ is illustrated on figure 10.

The number of terms involved in the sum of (6) depends on the kind of range sensor considered. For instance, while in the most general case this number of terms is an exponential function of the number of cells $N_{xr}$, in the case of a LIDAR sensor it is equal to $N_{xr}$ (i.e. the complexity is linear); the same is true for wide-field sensor if the nearest-target approximation applies (see below, equations 9 and 10, and above-cited European Patent Application 18305955). Indeed, a LIDAR only detects the nearest target, therefore two different configurations having a same nearest occupied cell give identical contributions. Let $L_j^{xr}$ be the event "the first occupied cell in $G_k^{xr}$ is $\hat{c}_j$". This means that all cells $\hat{c}_i$, $i<j$, are empty and that cells $\hat{c}_i$, $i>j$ can have any state. Summing all possible events $L_j^{xr}$, j={0, ... $N_{xr}$-1}, (6) can be written as:

$$P(x_r|z) = \eta \cdot P(x_r) \cdot \sum_j P(z|x_r, L_j^{xr}) \cdot P(L_j^{xr})$$

$$(7)$$

wherein:

- $P(z|x_r, L_j^{xr})$ is the sensor model evaluated when the carrier takes a pose $x_r$ and an obstacle is located at the distance $\hat{c}_j$ from $x_r$. Usually this model is given by a normal distribution $\mathcal{N}(d_j(x_r), \sigma)$ where $d_j(x_r)$ is the distance of $\hat{c}_j$ to $x_r$ and $\sigma$ a standard deviation;

- $P(L_j^{xr})$ is the probability of event $L_j^{xr}$, which is given by:

$$P(L_j^{xr}) = P\left(o(c_j)\right) \cdot \prod_{i=0}^{j-1} P\left(e(c_j)\right)$$

$$(8)$$

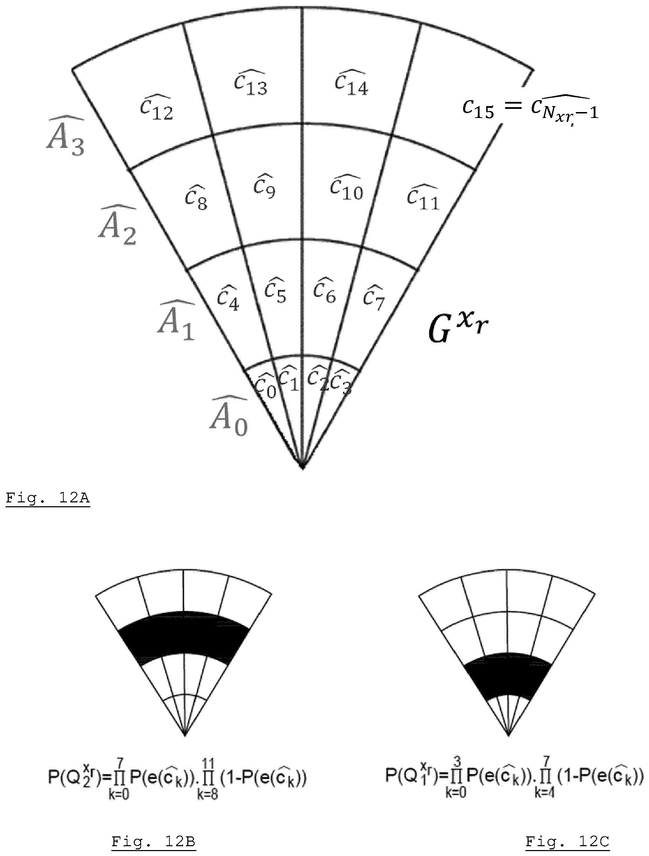

For sensors having a large field of view, the occupancy grid may take the form illustrated on figure 12A, wherein several cells are situated at a same distance from the sensor and form an "arc". In particular, in the example of figure 12A, cells $\hat{c}_0$ to $\hat{c}_3$ form a first arc $\hat{A}_0$, cells $\hat{c}_4$ to $\hat{c}_7$ form a second arc $\hat{A}_1$, cells $\hat{c}_8$ to $\hat{c}_{11}$ form a third arc $\hat{A}_2$ and cells $\hat{c}_{12}$ to $\hat{c}_{15} = \widehat{c_{N_{xr}-1}}$ form a fourth arc $\hat{A}_3 = \hat{A}_{M_{xr}-1}$ If a cell of the arc is occupied, the arc is considered to be occupied.

If the nearest-target hypothesis can be applied, for two configurations $G_{k1}^{xr}$ and $G_{k2}^{xr}$ sharing the same nearest occupied arc, $p(z|x_r, G_{k1}^{xr})$ can be taken to be equal to $p(z|x_r, G_{k2}^{xr})$. Thus for $G^{xr} = \{\hat{c}_0, \hat{c}_1, ..., \widehat{c_{Nxr-1}}\} = \{\widehat{A_0}, \widehat{A_1}, ..., \widehat{A_{Mxr-1}}\}$ $Q_j^{xr}$ is defined, for j=0,..., $N_{xr}$-1, as the event "$\hat{A}_j$ is the

first occupied arc in $G^{xr}$ (as a consequence, all cells in arcs $\hat{A}_i$ i<j are empty and cells in a $\hat{A}_i$ i>j can be in any state.

Summing all possible events $Q_j^{xr}$, equation (6) may be written:

$$P(x_r|z) = \eta \cdot P(x_r) \cdot \sum_j P(z|x_r, Q_j^{xr}) \cdot P(Q_j^{xr})$$

$$(9)$$

where $P(Q_j^{xr})$ is the probability of having the arc $\hat{A}_j$ as the first occupied arc, i.e. the probability of having all arcs $\hat{A}_i$ i<j empty, which is given by:

$$P(Q_j^{xr}) = \prod_{\hat{c}_k \in \hat{A}_j} \left(1 - P(e(\hat{c}_k))\right) \cdot \prod_{i=0}^{j-1} \prod_{\hat{c}_k \in \hat{A}_i} P(e(\hat{c}_i))$$

$$(10)$$

Figures 12B and 12C illustrate the events $Q_2^{xr}$ and $Q_1^{xr}$, respectively.

## Using an odometry measurement for updating the pose grid

Different kind of motion sensors can be used in order to update the carrier pose, such as IMU (Inertial Measurement Units), GPS, wheel encoders... The pose distribution at time t=0, $P_0(x_r)$ is deemed to be known, and updated when an odometry measurement u is received. The problem is then to compute $P_t(x_r|u)$ from $P_{t-1}(x_r)$.

For a fixed pose $x_r{}^*$, $P_t(x_r{}^*|u)$ is computed by summing over all possible poses:

$$P_t(x_r^*|u) = \sum_{x_r} P(x_r^*|x_r, u) \cdot P(x_r|u)$$

$$(11)$$

Taking into account the fact that $P(x_r|u) = P_{t-1}(x_r)$, (11) becomes:

$$P_t(x_r^*|u) = \sum_{x_r} P(x_r^*|x_r, u) \cdot P_{t-1}(x_r)$$

$$(12)$$

wherein:

- $P(x_r^*|x_r, u)$ is the motion model that depends on the type of the chosen motion sensor, and is usually tabulated and stored in a memory device;
- $P_{t-1}(x_r)$ is the previously computed (or initial, if t-1=0) pose distribution.

## Integer computations

A potential problem with the inventive method described above is that, in a naive implementation, computations would need to be performed using floating point arithmetic. The use of floating-point computation requires significant resources in terms of computing power, which are hardly compatible with the constraints specific to embedded systems.
According to some advantageous embodiments of the invention, however, occupancy and pose probability may be updated by making use of much simpler integer computation, while keeping an acceptable accuracy level.

It is worth noting that WO2017/050890 (already cited) discloses a method for updating occupancy grids only using integer computations. This method alone, however, is not sufficient to allow updating pose grids, too, without floating point computations.

Evaluating equations (1) - (12) requires five kind of elementary operations:

- additions;
- additive inversions - i.e. computing the complement to one of an operand;
- multiplications;
- divisions;
- "probability fusion", corresponding to equation (2).

Two alternative embodiments will be described, allowing carrying out all these operations using integer computation only. According to both embodiments of the invention, the probability values are discretized, i.e. they can only take values belonging to a finite set. The first embodiment uses a first, non-uniform discretization scheme and the second embodiment uses a second, uniform discretization scheme. A third discretization scheme (already disclosed in WO2017/050890) is used for carrying out "integer fusion" - it is therefore necessary to map the first or second discretization scheme onto the third and vice-verse, which can be done very cheaply using a lookup table.

*First embodiment*

Let $\varepsilon$ be a real value in ]0,1[. The discretization set $D_{log}$ of size $N_{log}$ is defined as:

$$D_{log} = \{1, (1 - \epsilon), (1 - \epsilon)^2, ..., 0.5, ..., (1 - \epsilon)^{N_{log}-2}, 0\} \tag{13}$$

It should be noted that $\varepsilon$ is chosen such that it exists an integer n (usually $n = N_{log}/2$ or $n = N_{log}/4$) satisfying $(1-\varepsilon)^n = 0.5$.

It can be easily verified that, for $i,j \in \{0...., N_{log}-1\}$, the product of $D_{log}[i]$ by $D_{log}[j]$ is given by:

$$D_{log}[i] \otimes D_{log}[j] = \begin{cases} D_{log}[i + j] & \text{if } i + j \leq N_{log} - 1 \\ 0 & \text{otherwise} \end{cases} \tag{14}$$

Therefore, the product of two values (probabilities, probability densities) discretized according to the discretization set $D_{log}$ can be computed using an integer operation on integer indexes.

The division of $D_{log}[i]$ by $D_{log}[j]$ is given by:

$$D_{log}[i] \oslash D_{log}[j] = \begin{cases} \text{undefined} & \text{if } j = N_{log} - 1 \\ 0 & \text{if } i = N_{log} - 1 \\ D_{log}[i - j] & \text{if } i \geq j \\ 1 & \text{if } i < j \end{cases} \tag{15}$$

Interestingly, in the inventive method, division is only used to compute the normalization factor $\eta < 1$, therefore the first condition never occurs. Again, only an integer operation on indexes needs to be performed.

The addition of $D_{log}[i]$ and $D_{log}[j]$, however, gives a result which - in general - does not belong to $D_{log}$. Indeed, one should solve the following equation

$$(1 - \epsilon)^{k^{i,j}_+} = (1 - \epsilon)^i + (1 - \epsilon)^j \tag{16}$$

which gives:

$$k_+^{i,j} = \frac{log((1 - \epsilon)^i + (1 - \epsilon)^j)}{log(1 - \epsilon)} \qquad (17)$$

Clearly, $k_+^{i,j}$ is not necessarily an integer. However, one may take the floor (or, alternatively, the ceiling, or the closest integer etc.) of (17), so that $k_+^{i,j}$ is redefined as:

$$k_+^{i,j} = floor(\frac{log((1 - \epsilon)^i + (1 - \epsilon)^j)}{log(1 - \epsilon)}) \qquad (18)$$

Addition is then represented by:

$$D_{log}[i] \oplus D_{log}[j] = \begin{cases} D_{log}[i] & \text{if } j = N_{log} - 1 \\ D_{log}[j] & \text{if } i = N_{log} - 1 \\ D_{log}[k_+^{i,j}] & \text{for } k_+^{i,j} \text{ in } (18) \text{ and if } 0 \leq k_+^{i,j} \leq N_{log} - 1 \\ 1 & \text{if } k_+^{i,j} < 0 \\ 0 & \text{if } k_+^{i,j} > N_{log} - 1 \end{cases} \qquad (19)$$

Computing the addition using (18) and (19) requires floating point operations. However, it is possible to compute (19) offline for all pairs (i,j) and store them in a lookup table. Note that, since addition is symmetric, the table only needs to store $N_{log}^2/2$ terms.

Additive inversion is performed in a similar way:

- $k_-^{i,j}$ is defined as follows:

$$k_-^i = floor(\frac{log(1 - (1 - \epsilon)^i)}{log(1 - \epsilon)}) \qquad (20)$$

- $1 \ominus D_{log}[j]$ is then defined as:

$$1 \ominus D_{log}[i] = \begin{cases} 1 & \text{if } i = N_{log} - 1 \\ 0 & \text{if } i = 0 \\ D_{log}[k_-^i] & \text{for } k_-^i \text{ in } (20) \text{ and if } 0 \leq k_-^i \leq N_{log} - 1 \\ 1 & \text{if } k_-^i < 0 \\ 0 & \text{if } k_-^i > N_{log} - 1 \end{cases} \qquad (21)$$

Like for addition, (21) is computed offline and stored in a table of size $N_{log}$.

As mentioned above, fusion requires mapping $D_{log}$ to a different discretization set $G_p$, the result being then mapped back to $D_{log}$. The theory of integer probability fusion was disclosed in WO2017/050890 and will be briefly recalled here.

Let $p$ be a probability value that verifies

$$0.5<p<1 \tag{22}$$

A sequence $p_n \, (n \in \mathbb{N})$ is defined as follows:

$$p_0 = 1/2$$
$$p_1 = p$$
$$p_2 = F(p,p)$$
$$p_3 = F(p_2,p)$$
$$\ldots$$
$$p_{n+1} = F(p_n,p) \tag{23}$$

where F(.,.) is the fusion operator

$$F(p,q) = \frac{p.q}{p.q + (1-p).(1-q)} \tag{24}$$

The definition of $p_n$ is then extended to negative integer values of n as follows:

$$p_0 = 1/2$$
$$p_{-1} = 1 - p$$
$$p_{-2} = F(1-p, 1-p)$$
$$p_{-3} = F(p_{-2}, 1-p)$$
$$\ldots$$
$$p_{-n-1} = F(p_{-n}, 1-p) \tag{25}$$

The discretization schemes, depending on parameter $p \in \, ]0.5;1[$ are then defined as follows :

$$G_p^- = \{(p_n), n \le 0\} \tag{26}$$

$$G_p^+ = \{(p_n), n \ge 0\} \tag{27}$$

It can be shown that the fusion of two elements $p_i$ and $p_j$ belonging to $G_p = G_p^+ \cup G_p^-$ is defined by:

$$F(p_i, p_j) = p_{i+j} \tag{28}$$

Therefore, $G_p$ is a discretization scheme which does not introduce errors when used for performing probability fusion.

As explained above, according to the present embodiment of the invention, when fusion has to be performed in order to update the occupancy grid upon reception of a range measurement, $D_{log}$ is mapped onto $G_p$, fusion is performed, and the result is mapped back onto $D_{log}$, the mapping being performed using lookup tables stored in a memory device.

More precisely, let $f_{G_p}(i)$, $\forall i \in \{0, .... N_{log} - 1\}$ be the index of the closest element in $G_p$ to $D_{log}[i]$.

The values of this function are then stored offline in a lookup table. Similarly, for $pi \in G_p$, let $f_{D_{loa}}(i)$ be the index of the closest element to $p_i$ in $D_{log}$. Then, for $i,j \in \{0,...,N_{log}-1\}$ the fusion of $D_{log}[i]$ and $D_{log}[j]$ is defined by:

$$F(D_{log}[i], D_{log}[j]) = f_{D_{log}}\left(p_{f_{G_p}(i)+f_{G_p}(j)}\right) \qquad (29)$$

*Second embodiment*

Let $N^* \in \mathbb{N}^*$ . The discretization set $D_{unif}$ of size $N^*+1$ is defined as:

$$D_{unif} = \{0, \frac{1}{N^*}, ..., 0.5, ..., \frac{N^* - 2}{N^*}, \frac{N^* - 1}{N^*}, 1\} \qquad (30)$$

The set $D_{unif}$ represents a discretization of the probabilities in [0, 1].

For $ij \in \{0,...N^*\}$ the addition of $D_{unif}[i]$ and $D_{unif}[j]$ is simply given by:

$$D_{unif}[i] \oplus D_{unif}[j] = \begin{cases} D_{unif}[i+j] & \text{if } i+j \leq N^* \\ 1 & \text{otherwise} \end{cases} \qquad (31)$$

Therefore, the sum of two values (probabilities, probability densities) discretized according to the discretization set $D_{unif}$ can be computed using an integer operation on integer indexes. The same applies to additive inversion. Indeed, for $i \in \{0,...N^*\}$, $1- D_{unif}[i]$ is given by:

$$1 \ominus D_{unif}[i] = \begin{cases} D_{unif}[N^* - i] & \text{if } N^* - i \geq 0 \\ 0 & \text{otherwise} \end{cases} \qquad (32)$$

For $j \in \{0,...N^*\}$ the product of $D_{unif}[i]$ and $D_{unif}[j]$ cannot be exactly represented in $D_{unif}$. Indeed, one should solve the following equation for $k_\times^{i,j}$ :

$$\frac{k_\times^{i,j}}{N^*} = \frac{i}{N^*} \cdot \frac{j}{N^*} \qquad (33)$$

which yields

$$k_\times^{i,j} = \frac{i \cdot j}{N^*} \qquad (34)$$

It can be easily understood that $k_\times^{i,j}$ is not necessarily an integer. As in the first embodiment, one can take the floor of (34) - or, alternatively, the ceiling, or the closest integer etc. - and redefine $k_\times^{i,j}$ as:

$$k_\times^{i,j} = floor(\frac{i \cdot j}{N^*})$$

(35)

Thus, multiplication in $D_{unif}$ is represented by

$$D_{unif}[i] \otimes D_{unif}[j] = \begin{cases} D_{unif}[i] & \text{if } j = N^* \\ D_{unif}[j] & \text{if } i = N^* \\ 0 & \text{if } i = 0 \text{ or } j = 0 \\ D_{unif}[k_\times^{i,j}] & \text{for } k_\times^{i,j} \text{ in (35) and if } 0 \leq k_\times^{i,j} \leq N^* \\ 0 & \text{if } k_\times^{i,j} < 0 \\ 1 & \text{if } k_\times^{i,j} > N^* \end{cases}$$

(36)

The values of $D_{unif}[i] \otimes D_{unif}[j]$, as defined in (36), for all *i,j* pairs are then computed offline and stored in a lookup table.

Division is dealt with similarly. One should solve the following equation for $k_d^{i,j}$ :

$$\frac{k_d^{i,j}}{N^*} = \frac{i}{N^*} \div \frac{j}{N^*}$$

(37)

which yields:

$$k_d^{i,j} = \frac{i \cdot N^*}{j}$$

(38)

As (38) does not necessarily gives an integer value, $k_d^{i,j}$ is redefined by taking the floor of (38):

$$k_d^{i,j} = floor(\frac{i \cdot N^*}{j})$$

(39)

Division in $D_{unif}$ is then represented by:

$$D_{unif}[i] \oslash D_{unif}[j] = \begin{cases} \text{undefined} & \text{if } j = 0 \\ D_{unif}[i] & \text{if } j = N^* \\ 0 & \text{if } i = 0 \\ 1 & \text{if } i = j \\ D_{unif}[k_d^{i,j}] & \text{for } k_d^{i,j} \text{ in (39) and if } 0 \le k_d^{i,j} \le N^* \\ 0 & \text{if } k_d^{i,j} < 0 \\ 1 & \text{if } k_d^{i,j} > N^* \end{cases}$$

(40)

Note that, in the inventive method, the first condition (j=0, leading to an undefined result) can never occur. As for product, the values of $D_{unif}[i] \oslash D_{unif}[j]$, as defined in (40), for all *i,j* pairs (except *j=0*) are then computed offline and stored in a lookup table.

Fusion is dealt with in a similar way than in the first embodiment. $gG_p(i)$, $\forall i \in \{0, ..., N^*\}$ is defined as the index of the closest element of $G_p$ to $D_{unif}[i]$. The values of this function are stored in a lookup table. Similarly, for $p_i \in G_p$, let $g_{D_{unif}}(i)$ be the index of the closest element to $p_i$ in $D_{unif}$. Then, for $i,j \in \{0,...,N^*\}$ the fusion of $D_{unif}[i]$ and $D_{unif}[j]$ is defined by:

$$F(D_{unif}[i], D_{unif}[j]) = g_{D_{unif}}\left(p_{g_{G_p}(i)+g_{G_p}(j)}\right)$$

(41)

Both the first and the second embodiments allow then to carry out the inventive method using only:

- integer computations on said integer indices; and
- using integer indices for retrieving pre-computed results in lookup tables.

The invention has been described with reference to embodiments wherein a single mobile body, carrying odometry and distance sensors, is localized, and its environment is mapped. Other embodiments are possible. For instance, some or even all of the sensors may not be embarked on the mobile body - e.g. an external Doppler radar may be used to obtain relevant odometry measurements. Moreover, several sensor-carrying mobile bodies moving within a same environment may share - and contribute to update - a single occupancy grid, while having each a respective pose grid.

References

[1] A. Elfes, "Occupancy grids: a stochastic spatial representation for active robot perception", Sixth Conference on Uncertainty in AI, 1990.
[2] D. Fox, W. Burgard, and S. Thrun, "Markov localization for mobile robots in dynamic environments", Journal of Artificial Intelligence Research, 1999.
[3] M. Montemerlo, S. Thrun, D. Koller, and B.Wegbreit "FastSLAM: A factored solution to the simultaneous localization and mapping problem" in AAAI National Conference on Artificial Intelligence. AAAI, pp. 593-598, 2002.
[4] T. Duckett and U. Nehmzow "Mobile robot self-localisation using occupancy histograms and a mixture of gaussian location hypotheses" Robotics and Autonomous Systems, vol. 34, no. 2, pp. 117-129, 2001.
[5] J. Nordh and K. Berntorp "Extending the occupancy grid concept for low-cost sensor-based slam" in IFAC Proceedings Volumes, vol. 45, no. 22, Elsevier, pp. 151-156, 2012.
[6] K. P. Murphy, "Bayesian map learning in dynamic environments" in Advances in Neural Information Processing Systems, pp. 1015-1021, 2000.

**Claims**

1. A method of performing simultaneous localization of a mobile body (R) and mapping of its environment, the method comprising the following steps, carried out by a data processor:

    a) defining:

    - an occupancy grid (OG) on a region of said environment, the grid comprising a plurality of cells, an occupancy probability by an obstacle being associated to each cell of the occupancy grid, and
    - a pose grid ($\Pi$) comprising a plurality of cells, each representing a position and orientation of the mobile body, a pose probability being associated to each cell of the pose grid;

    b) receiving a first time series of a plurality of distance measurements ($z_1$, $z_2$), each of said measurements being representative of a distance between a point of the mobile body and at least one nearest obstacle and, upon reception of a distance measurement: either

    b1) updating the occupancy probabilities of the occupancy grid as a function of present values of said occupancy probabilities, of the received distance measurement and of the pose probabilities of the pose grid; or
    b2) updating the pose probabilities of the pose grid as a function of present values of said pose probabilities, of the received distance measurement and of the occupancy probabilities of the occupancy grid; and

    c) receiving a second time series of odometry measurements ($u_1$, $u_2$), each of said measurements being representative of a motion of the mobile body in the environment and, upon reception of an odometry measurement, updating the pose probabilities of the pose grid as a function of present values of said pose probabilities and of the received odometry measurement;

    part of the distance measurements being used for carrying out sub-step b2 of updating the pose probabilities of the pose grid and part of the distance measurements being used for carrying out sub-step b1 of updating the occupancy probabilities of the occupancy grid.

2. The method of claim 1 wherein steps b) and c) are carried out asynchronously.

3. The method of any one of the preceding claims wherein said updating the occupancy probabilities of the occupancy grid comprises:

    - building a temporary occupancy grid (TOG) comprising a plurality of cells, each associated to an occupancy probability computed as a weighted sum of a plurality of contributions obtained by applying to the distance measurement a plurality of inverse statistical models (ISM) of a corresponding distance sensor ($RS_1$ - $RS_4$), each inverse model being associated to a cell of the pose grid and weighted by the corresponding pose probability; and
    - fusing the occupancy probabilities of the occupancy grid and of the temporary occupancy grid.

4. The method of any one of the preceding claims wherein said updating the pose probabilities of the pose grid upon reception of a distance measurement comprises multiplying the present values of said pose probabilities by a weighted sum of direct statistical models of a corresponding distance sensor for all possible configurations of the occupancy grid, a configuration attributing an 'empty' or an 'occupied' state to each cell of the occupancy grid, each weight being proportional to a probability of the corresponding configuration.

5. The method of any one of the preceding claims wherein said updating the pose probabilities of the pose grid upon reception of an odometry measurement comprises computing a weighted sum of a plurality of contribution obtained by applying to the odometry measurement a plurality of inverse statistical models of a corresponding motion sensor (OS), each inverse model being associated to a cell of the pose grid and weighted by the corresponding probability.

6. The method according to any one of the preceding claims wherein probability values are constrained to take discrete values belonging to a first set of finite cardinality, each element of the first set being identified by an integer index, and wherein updating the occupancy probabilities of the occupancy grid, updating the probabilities of the pose grid upon reception of a distance measurement and updating the probabilities of the pose grid upon reception of an odometry measurement are carried out exclusively by:

- performing integer computations on said integer indices; and
- using said integer indices for retrieving pre-computed results stored in a memory.

7. The method of claim 6 wherein said first set of finite cardinality corresponds to a discretization of a [0, 1] interval according to an exponential law, whereby multiplications and divisions are carried out by performing integer computations on integer indices of the first set, while additions and additive inversions are carried out using integer indices of the first set for retrieving pre-computed results stored in a memory.

8. The method of claim 6 wherein said first set of finite cardinality corresponds to a linear discretization of a [0, 1] interval, whereby additions and additive inversions are carried out by performing integer computations on integer indices of the first set, while multiplications and divisions are carried out using integer indices of the first set for retrieving pre-computed results stored in a memory.

9. The method according to any one of claims 6 to 8 when depending from claim 3, comprising:

- projecting the discrete values belonging to the first set onto discrete values belonging to a second set of finite cardinality, each element of the second set being identified by an integer index;
- fusing the occupancy probabilities of the occupancy grid and of the temporary occupancy grid by performing integer computations on the integer indices of the second set; and
- projecting back the discrete values belonging to the second set onto discrete values belonging to the first set.

10. The method of claim 9 wherein said second set of finite cardinality is formed by the union of two subsets $G_p^-$ et $G_p^+$ defined by:

$$G_p^- = \{(p_n), n \leq 0\}$$

$$G_p^+ = \{(p_n), n \geq 0\}$$

wherein n is a relative integer index, p a parameter taking a value strictly comprised between 0.5 and 1 and values $p_n$ are recursively defined by

$$p_0 = 0{,}5 \; ;$$

$$p_1 = p \; ;$$

$$p_{n+1} = F(p_n, p) \; \forall n > 1$$

$$p_{-1} = 1 - p \; ;$$

$$p_{n-1} = F(p_n, p_{-1}) \; \forall n < -1$$

whereby fusing occupancy probabilities $p_i$ and $p_j$ is carried out by computing:

$$F\left(p_i, p_j\right) = p_{i+j}$$

11. An apparatus (LPA) for performing simultaneous localization of a mobile body (R) and mapping of its environment, comprising:

- at least one input port for receiving a plurality of signals representative of a first time series of distance measurements arising from one or more distance sensor ($RS_1$ - $RS_4$) and a second time series of odometry measurements arising from one or more motion sensor (OS); and
- a data processor (DP) configured to receive as input said signals and to use them to construct an updated occupancy grid and an updated pose grid by applying a method as claimed in one of claims 1 to 10.

12. The apparatus of claim 11, also comprising one or more distance sensors adapted to generate signals representative of said distance measurements and one or more motion sensors adapted to generate signals representative of said odometry measurements, said sensor being linked to said input port or ports.

13. A mobile robot (R) carrying an apparatus according to claim 12.

**Patentansprüche**

1. Verfahren zum gleichzeitigen Lokalisieren eines mobilen Körpers (R) und zum Kartieren seiner Umgebung, wobei das Verfahren die folgenden von einem Datenprozessor ausgeführten Schritte umfasst:

   a) Definieren:

   - eines Belegungsgitters (OG) auf einer Region der Umgebung, wobei das Gitter eine Vielzahl von Zellen umfasst, wobei mit jeder Zelle des Belegungsgitters eine Belegungswahrscheinlichkeit durch ein Hindernis assoziiert ist, und
   - eines Posengitters ($\Pi$), das eine Vielzahl von Zellen umfasst, die jeweils eine Position und Orientierung des mobilen Körpers repräsentieren, wobei mit jeder Zelle des Posengitters eine Posenwahrscheinlichkeit assoziiert ist,

   b) Empfangen einer ersten Zeitreihe von einer Vielzahl von Abstandsmesswerten ($z_1$, $z_2$), wobei jeder der Messwerte für einen Abstand zwischen einem Punkt des mobilen Körpers und mindestens einem nächstgelegenen Hindernis repräsentativ ist, und bei Empfang eines Abstandsmesswerts: entweder

   b1) Aktualisieren der Belegungswahrscheinlichkeiten des Belegungsgitters in Abhängigkeit von aktuellen Werten der Belegungswahrscheinlichkeiten, des empfangenen Abstandsmesswerts und der Posenwahrscheinlichkeiten des Posengitters; oder
   b2) Aktualisieren der Posenwahrscheinlichkeiten des Posengitters in Abhängigkeit von aktuellen Werten der Posenwahrscheinlichkeiten, des empfangenen Abstandsmesswerts und der Belegungswahrscheinlichkeiten des Belegungsgitters, und

   c) Empfangen einer zweiten Zeitreihe von Odometriemesswerten ($u_1$, $u_2$), wobei jeder der Messwerte für eine Bewegung des mobilen Körpers in der Umgebung repräsentativ ist, und bei Empfang eines Odometriemesswerts, Aktualisieren der Posenwahrscheinlichkeiten des Posengitters in Abhängigkeit von den aktuellen Werten der Posenwahrscheinlichkeiten und des empfangenen Odometriemesswerts,

   wobei ein Teil der Abstandsmesswerte zum Ausführen von Teilschritt b2 des Aktualisierens der Posenwahrscheinlichkeiten des Posengitters verwendet wird und ein Teil der Abstandsmesswerte zum Ausführen von Teilschritt b1 des Aktualisierens der Belegungswahrscheinlichkeiten des Belegungsgitters verwendet wird.

2. Verfahren nach Anspruch 1, wobei die Schritte b) und c) asynchron ausgeführt werden.

3. Verfahren nach einem der vorhergehenden Ansprüche, wobei das Aktualisieren der Belegungswahrscheinlichkeiten des Belegungsgitters Folgendes umfasst:

   - Aufbauen eines temporären Belegungsgitters (TOG), das eine Vielzahl von Zellen umfasst, von denen jede mit einer Belegungswahrscheinlichkeit assoziiert ist, die als eine gewichtete Summe einer Vielzahl von Beiträgen berechnet wird, die durch Anwenden einer Vielzahl von inversen statistischen Modellen (ISM) eines entsprechenden Abstandssensors ($RS_1$ - $RS_4$) auf den Abstandsmesswert erhalten werden, wobei jedes inverse Modell mit einer Zelle des Posengitters assoziiert und mit der entsprechenden Posenwahrscheinlichkeit gewichtet wird, und

- Zusammenführen der Belegungswahrscheinlichkeiten des Belegungsgitters und des temporären Belegungsgitters.

4. Verfahren nach einem der vorhergehenden Ansprüche, wobei das Aktualisieren der Posenwahrscheinlichkeiten des Posengitters bei Empfang eines Abstandsmesswerts ein Multiplizieren der aktuellen Werte der Posenwahrscheinlichkeiten mit einer gewichteten Summe direkter statistischer Modelle eines entsprechenden Abstandssensors für alle möglichen Konfigurationen des Belegungsgitters umfasst, wobei eine Konfiguration jeder Zelle des Belegungsgitters einen "leeren" oder einen "belegten" Zustand zuordnet, wobei jede Gewichtung proportional zu einer Wahrscheinlichkeit der entsprechenden Konfiguration ist.

5. Verfahren nach einem der vorhergehenden Ansprüche, wobei das Aktualisieren der Posenwahrscheinlichkeiten des Posengitters bei Empfang eines Odometriemesswerts das Berechnen einer gewichteten Summe einer Vielzahl von Beiträgen umfasst, die durch Anwenden mehrerer inverser statistischer Modelle eines entsprechenden Bewegungssensors (OS) auf den Odometriemesswert erhalten werden, wobei jedes inverse Modell mit einer Zelle des Posengitters assoziiert und mit der entsprechenden Wahrscheinlichkeit gewichtet wird.

6. Verfahren nach einem der vorhergehenden Ansprüche, wobei Wahrscheinlichkeitswerte darauf beschränkt sind, diskrete Werte anzunehmen, die zu einem ersten Satz von endlicher Kardinalität gehören, wobei jedes Element des ersten Satzes durch einen ganzzahligen Index identifiziert wird, und wobei das Aktualisieren der Belegungswahrscheinlichkeiten des Belegungsgitters, das Aktualisieren der Wahrscheinlichkeiten des Posengitters bei Empfang eines Abstandsmesswerts und das Aktualisieren der Wahrscheinlichkeiten des Posengitters bei Empfang eines Odometriemesswerts ausschließlich ausgeführt werden durch:

- Durchführen von ganzzahligen Berechnungen an den ganzzahligen Indizes; und
- Verwenden der ganzzahligen Indizes zum Abrufen von in einem Speicher gespeicherten vorberechneten Ergebnissen.

7. Verfahren nach Anspruch 6, wobei der erste Satz von endlicher Kardinalität einer Diskretisierung eines [0, 1]-Intervalls gemäß einem Exponentialgesetz entspricht, wobei Multiplikationen und Divisionen durch Ausführen von ganzzahligen Berechnungen an ganzzahligen Indizes des ersten Satzes ausgeführt werden, während Additionen und additive Inversionen unter Verwendung von ganzzahligen Indizes des ersten Satzes zum Abrufen von in einem Speicher gespeicherten vorberechneten Ergebnissen ausgeführt werden.

8. Verfahren nach Anspruch 6, wobei der erste Satz von endlicher Kardinalität einer linearen Diskretisierung eines Intervalls [0, 1] entspricht, wobei Additionen und additive Inversionen durch die Durchführung ganzzahliger Berechnungen an ganzzahligen Indizes des ersten Satzes ausgeführt werden, während Multiplikationen und Divisionen unter Verwendung ganzzahliger Indizes des ersten Satzes zum Abrufen von in einem Speicher gespeicherten vorberechneten Ergebnissen ausgeführt werden.

9. Verfahren nach einem der Ansprüche 6 bis 8 in Abhängigkeit von Anspruch 3, das Folgendes umfasst:

- Projizieren der zum ersten Satz gehörenden diskreten Werte auf zu einem zweiten Satz mit endlicher Kardinalität gehörende diskrete Werte, wobei jedes Element des zweiten Satzes durch einen ganzzahligen Index identifiziert wird,
- Zusammenführen der Belegungswahrscheinlichkeiten des Belegungsgitters und des temporären Belegungsgitters durch Ausführen ganzzahliger Berechnungen an den ganzzahligen Indizes des zweiten Satzes; und
- Zurückprojizieren der zum zweiten Satz gehörenden diskreten Werte auf zum ersten Satz gehörende diskrete Werte.

10. Verfahren nach Anspruch 9, wobei der zweite Satz von endlicher Kardinalität durch die Vereinigung von zwei Teilsätzen $G_p^-$ und $G_p^+$ gebildet wird, definiert durch:

$$G_p^- = \{(p_n), n \le 0\}$$

$$G_p^+ = \{(p_n), n \ge 0\}$$

wobei n ein relativer ganzzahliger Index ist, p ein Parameter ist, der einen Wert streng zwischen 0,5 und 1 annimmt, und die Werte $p_n$ rekursiv definiert sind durch

$$p_0=0,5 \; ;$$

$$p_1=p \; ;$$

$$p_{n+1}=F(p_n,p) \;\; \forall n>1$$

$$p_{-1}=1-p \; ;$$

$$p_{n-1}=F(p_n, p_{-1}) \;\; \forall n<-1$$

wobei das Zusammenführen der Belegungswahrscheinlichkeiten $p_i$ und $p_j$ ausgeführt wird durch Berechnen von:

$$F(p_i, p_j) = P_{i+j}$$

**11.** Vorrichtung (LPA) zum gleichzeitigen Durchführen der Lokalisierung eines mobilen Körpers (R) und der Kartierung seiner Umgebung, die Folgendes umfasst:

- mindestens einen Eingangsanschluss zum Empfangen einer Vielzahl von Signalen, die für eine erste Zeitreihe von von einem oder mehreren Entfernungssensoren ($RS_1$ - $RS_4$) stammenden Entfernungsmesswerten und eine zweite Zeitreihe von von einem oder mehreren Bewegungssensoren (OS) stammenden Odometriemesswerten repräsentativ sind, und
- einen Datenprozessor (DP), der zum Empfangen der Signale als Eingabe und zum Verwenden derselben zum Konstruieren eines aktualisierten Belegungsgitters und eines aktualisierten Posengitters durch Anwenden eines Verfahrens nach einem der Ansprüche 1 bis 10 konfiguriert ist.

**12.** Vorrichtung nach Anspruch 11, die auch einen oder mehrere Abstandssensoren, die zum Erzeugen von für die Abstandsmesswerte repräsentativen Signalen ausgelegt sind, und einen oder mehrere Bewegungssensoren umfasst, die zum Erzeugen von für die Odometriemesswerte repräsentativen Signalen ausgelegt sind, wobei der Sensor mit dem/den Eingangsanschluss oder -anschlüssen verbunden ist.

**13.** Mobiler Roboter (R), der eine Vorrichtung nach Anspruch 12 trägt.

**Revendications**

**1.** Procédé d'exécution simultanée d'une localisation d'un corps mobile (R) et d'une cartographie de son environnement, le procédé comprenant les opérations suivantes, exécutées par un processeur de données :

a) définition :

- d'une grille d'occupation (OG) sur une région du dit environnement, la grille comprenant une pluralité de cases, une probabilité d'occupation par un obstacle étant associée à chaque case de la grille d'occupation, et
- d'une grille de pose ($\Pi$) comprenant une pluralité de cases, chacune représentant une position et une orientation du corps mobile, une probabilité de pose étant associée à chaque case de la grille de pose,

b) réception d'une première série temporelle d'une pluralité de mesures de distance ($z_1$, $z_2$), chacune des dites mesures étant représentative d'une distance entre un point du corps mobile et au moins un obstacle le plus proche et, lors de la réception d'une mesure de distance : soit

b1) actualisation des probabilités d'occupation de la grille d'occupation en fonction des valeurs actuelles desdites probabilités d'occupation, de la mesure de distance reçue et des probabilités de pose de la grille de pose ; ou

b2) actualisation des probabilités de pose de la grille de pose en fonction des valeurs actuelles desdites probabilités de pose, de la mesure de distance reçue et des probabilités d'occupation de la grille d'occupation ; et

c) réception d'une deuxième série temporelle de mesures d'odométrie ($u_1$, $u_2$), chacune desdites mesures étant représentative d'un déplacement du corps mobile dans l'environnement et, lors de la réception d'une mesure d'odométrie, actualisation des probabilités de pose de la grille de pose en fonction des valeurs actuelles desdites probabilités de pose et de la mesure d'odométrie reçue ;

une partie des mesures de distance étant utilisée pour exécuter la sous-étape b2 d'actualisation des probabilités de pose de la grille de poste et une partie des mesures de distance étant utilisée pour exécuter la sous-étape b1 d'actualisation des probabilités d'occupation de la grille d'occupation.

2. Procédé selon la revendication 1, dans lequel les opérations b) et c) sont exécutées de manière asynchrone.

3. Procédé selon l'une quelconque des revendications précédentes, dans lequel ladite actualisation des probabilités d'occupation de la grille d'occupation comprend :

- la constitution d'une grille d'occupation temporaire (TOG) comprenant une pluralité de cases, chacune étant associée à une probabilité d'occupation calculée sous forme d'une somme pondérée d'une pluralité de contributions obtenues en appliquant à la mesure de distance une pluralité de modèles statistiques inverses (SM) d'un capteur de distance correspondant (RS1 - RS4), chaque modèle inverse étant associé à une case de la grille de pose et pondéré par la probabilité de pose correspondante ; et
- la fusion des probabilités d'occupation de la grille d'occupation et de la grille d'occupation temporaire.

4. Procédé selon l'une quelconque des revendications précédentes, dans lequel ladite actualisation des probabilités de pose de la grille de pose lors de la réception d'une mesure de distance comprend une multiplication des valeurs actuelles desdites probabilités de pose par une somme pondérée de modèles statistiques directs d'un capteur de distance correspondant pour toutes les configurations possibles de la grille d'occupation, une configuration attribuant un état « vide » ou « occupé » à chaque case de la grille d'occupation, chaque pondération étant proportionnelle à une probabilité de la configuration correspondante.

5. Procédé selon l'une quelconque des revendications précédentes, dans lequel ladite actualisation des probabilités de pose de la grille de pose lors de la réception d'une mesure d'odométrie comprend le calcul d'une somme pondérée d'une pluralité de contributions obtenues en appliquant à la mesure d'odométrie une pluralité de modèles statistiques inverses d'un capteur de mouvement correspondant (OS), chaque modèle inverse étant associé à une case de la grille de pose et pondéré par la probabilité correspondante.

6. Procédé selon l'une quelconque des revendications précédentes, dans lequel des valeurs de probabilité sont contraintes de prendre des valeurs discrètes appartenant à un premier ensemble de cardinalité finie, chaque élément du premier ensemble étant identifié par un indice entier, et dans lequel l'actualisation des probabilités d'occupation de la grille d'occupation, l'actualisation des probabilités de la grille de pose lors de la réception d'une mesure de distance et l'actualisation des probabilités de la grille de pose lors de la réception d'une mesure d'odométrie sont réalisées exclusivement par :

- l'exécution de calculs d'entier sur lesdits indices entiers ; et
- l'utilisation desdits indices entiers pour extraire des résultats pré-calculés stockés dans une mémoire.

7. Procédé selon la revendication 6, dans lequel ledit premier ensemble de cardinalité finie correspond à une discrétisation d'un intervalle [0, 1] selon une loi exponentielle, où des multiplications et les divisions sont réalisées en exécutant des calculs d'entier sur des indices entiers du premier ensemble, tandis que des additions et des inversions d'addition sont réalisées en utilisant des indices entiers du premier ensemble pour extraire des résultats pré-calculés stockés dans une mémoire.

8. Procédé selon la revendication 6, dans lequel ledit premier ensemble de cardinalité finie correspond à une discrétisation linéaire d'un intervalle [0, 1], où des additions et des inversions d'addition sont réalisées en exécutant des calculs d'entier sur des indices entiers du premier ensemble, tandis que des multiplications et des divisions sont réalisées en utilisant des indices entiers du premier ensemble pour extraire des résultats pré-calculés stockés dans une mémoire.

**9.** Procédé selon l'une quelconque des revendications 6 à 8 lorsqu'elle dépend de la revendication 3, comprenant :

- la projection des valeurs discrètes appartenant au premier ensemble sur des valeurs discrètes appartenant à un deuxième ensemble de cardinalité finie, chaque élément du deuxième ensemble étant identifié par un indice entier ;
- la fusion des probabilités d'occupation de la grille d'occupation et de la grille d'occupation temporaire en exécutant des calculs d'entier sur les indices entiers du deuxième ensemble ; et
- la rétroprojection des valeurs discrètes appartenant au deuxième ensemble sur des valeurs discrètes appartenant au premier ensemble.

**10.** Procédé selon la revendication 9, dans lequel ledit deuxième ensemble de cardinalité finie est formé par l'union de deux sous-ensembles $G_p^-$ et $G_p^+$ définis par :

$$G_p^- = \{(p_n), n \leq 0\}$$

$$G_p^+ = \{(p_n), n \geq 0\}$$

où n est un indice entier relatif, p un paramètre ayant une valeur strictement comprise entre 0,5 et 1 et des valeurs de $p_n$ sont définies récursivement par :

$$p_0 = 0{,}5 \; ;$$

$$p_1 = p \; ;$$

$$p_{n+1} = F(p_n, p) \; \forall n > 1$$

$$p_{-1} = 1 - p \; ;$$

$$p_{n-1} = F(p_n, p_{-1}) \; \forall n < -1$$

où la fusion des probabilités d'occupation $p_i$ et $p_j$ est effectuée en calculant :

$$F(p_i, p_j) = p_{i+j}$$

**11.** Appareil (LPA) permettant d'exécuter simultanément une localisation d'un corps mobile (R) et une cartographie de son environnement, comprenant :

- au moins un port d'entrée pour recevoir une pluralité de signaux représentatifs d'une première série temporelle de mesures de distance provenant d'un ou plusieurs capteurs de distance ($RS_1$ - $RS_4$) et une deuxième série temporelle de mesures d'odométrie provenant d'un ou plusieurs capteurs de mouvement (OS), et
- un processeur de données (DP) configuré pour recevoir en entrée lesdits signaux et pour les utiliser pour constituer une grille d'occupation actualisée et une grille de pose actualisée en appliquant un procédé selon l'une des revendications 1 à 10.

**12.** Appareil selon la revendication 11, comprenant en outre un ou plusieurs capteurs de distance conçus pour générer des signaux représentatifs desdites mesures de distance et un ou plusieurs capteurs de mouvement conçus pour générer des signaux représentatifs desdites mesures d'odométrie, lesdits capteurs étant reliés au(x) dit(s) port ou ports d'entrée.

**13.** Robot mobile (R) portant un appareil selon la revendication 12.

Fig. 1

Fig. 2

Fig. 3

P(o|z)

Fig. 4

Fig. 5

Fig. 6

Fig. 7

Start

Inputs:
$P(x_r)$ , $z$, Table: $P(o_i|z, x_r)$

$P_{x_r}(o_i|z) = 0$

$x_r \in \Pi$ ?

FALSE

TRUE

Get $P(o_i|z, x_r)$

$P_{x_r}(o_i|z) += P(o_i|z, x_r).P(x_r)$

Stop

Fig. 8

$c_{N-1}$

$G^{x_r}$

$\overline{c_8}$

$\overline{c_7}$

$\overline{c_6}$

$\overline{c_5}$

$\overline{c_4}$

$\overline{c_3}$

$\overline{c_2}$

$\overline{c_1}$

$\overline{c_0}$

$c_0$  $c_1$  $c_2$  . .

$G$

Fig. 9

$$\Pi \quad P(x_r)$$

$$P(o_i) \qquad \text{OG}$$

$$P(z|x_r, G_k^{x_r})$$

Current Position grid

A

Current Heading grid

Sensor Model

Current Occupancy grid

$z$

$$P(x_r|z)$$

Resulting Position grid

Resulting Heading grid

Fig. 10

Fig. 11

Fig. 12A

$$P(Q_2^{x_r}) = \prod_{k=0}^{7} P(e(\widehat{c}_k)) \cdot \prod_{k=8}^{11} (1 - P(e(\widehat{c}_k)))$$

Fig. 12B

$$P(Q_1^{x_r}) = \prod_{k=0}^{3} P(e(\widehat{c}_k)) \cdot \prod_{k=4}^{7} (1 - P(e(\widehat{c}_k)))$$

Fig. 12C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8340852 B
- US 2004013295 A
- US 20160062361 A

- WO 2017050890 A
- EP 3364213 A
- EP 18305955 A

**Non-patent literature cited in the description**

- **A. ELFES.** Occupancy grids: a stochastic spatial representation for active robot perception. *Sixth Conference on Uncertainty in AI,* 1990
- **D. FOX, W. BURGARD ; S. THRUN.** Markov localization for mobile robots in dynamic environments. *Journal of Artificial Intelligence Research,* 1999
- **M. MONTEMERLO ; S. THRUN ; D. KOLLER ; B.WEGBREIT.** FastSLAM: A factored solution to the simultaneous localization and mapping problem. *AAAI National Conference on Artificial Intelligence. AAAI,* 2002, 593-598

- **T. DUCKETT ; U. NEHMZOW.** Mobile robot self-localisation using occupancy histograms and a mixture of gaussian location hypotheses. *Robotics and Autonomous Systems,* 2001, vol. 34 (2), 117-129
- **J. NORDH ; K. BERNTORP.** Extending the occupancy grid concept for low-cost sensor-based slam. *IFAC Proceedings,* 2012, vol. 45, 151-156
- **K. P. MURPHY.** Bayesian map learning in dynamic environments. *Advances in Neural Information Processing Systems,* 2000, 1015-1021